# FASCICULE DE BREVET EUROPEEN

(11) **EP 3 123 797 B1**
(45) Date de publication et mention de la délivrance du brevet: **21.09.2022**
(21) Numéro de dépôt: 15718535.6
(22) Date de dépôt: 01.04.2015
(51) Int. Cl.: H04W 72/04, H04W 72/08

(54) **PROCÉDÉ D'ALLOCATION DE RESSOURCES RADIO DANS UN SYSTÈME DE TÉLÉCOMMUNICATIONS**
VERFAHREN ZUM ZUWEISEN VON FUNKRESSOURCEN IN EINEM TELEKOMMUNIKATIONSSYSTEM
METHOD FOR ALLOCATING RADIO RESOURCES IN A TELECOMMUNICATIONS SYSTEM

(30) Priorité: 27.03.2014 FR 1400745
(43) Date de publication de la demande: 01.02.2017
(73) Titulaire: Airbus DS SLC, 78990 Elancourt (FR)
(72) Inventeur: GEORGEAUX, Eric, 78180 Montigny le Bretonneux (FR); MEGE, Philippe, 92340 Bourg la Reine (FR); MARTINOD, Laurent, 78150 Le Chesney (FR); FLOREA, Alina-Alexandra, 78180 Montigny le Bretonneux (FR); NGUYEN, Hang, 91220 Brétigny sur Orge (FR)
(74) Mandataire: Cabinet Camus Lebkiri
(86) Numéro de dépôt international: PCT/FR2015/050852
(87) Numéro de publication internationale: WO 2015/145093

(56) Documents cités:
- WO-A1-2013/066125
- WO-A1-2013/066125
- WO-A1-2013/110212
- WO-A1-2013/110212

## Description

### DOMAINE TECHNIQUE ET OBJET DE L'INVENTION

La présente invention se rapporte au domaine de l'allocation de ressources radio dans un système de télécommunications et concerne plus particulièrement un procédé d'allocation de ressources radio dans un système de télécommunications large-bande.

### ETAT DE LA TECHNIQUE

Un système de télécommunications large-bande comprend de manière connue un réseau comportant notamment des stations de base, reliées entre elles via des éléments intermédiaires tels que des routeurs ou des passerelles, auxquelles peuvent se connecter des équipements d'utilisateur pour communiquer via ledit réseau. Une même communication peut être destinée à une pluralité d'équipements d'utilisateur (communication dite « point-à-multipoints ») ou bien à un seul équipement d'utilisateur (communication dite « point-à-point »).

Dans un réseau de type Third-Generation Partnership Project Long-Term Evolution (3GPP LTE), l'interface radio utilisée sur le lien descendant pour transmettre une communication codée et modulée entre une station de base et un équipement d'utilisateur est basée sur la technologie Orthogonal Frequency Division Multiple Access (OFDMA).

Dans cette technologie, les ressources radio sont réparties en temps et en fréquence dans des blocs de ressources (Resource Blocks ou RBs en langue anglaise). Un bloc de ressource a une durée de 0,5 ms (un « time-slot ») et une bande passante de 180 kHz (12 sous-porteuses fréquentielles). Un canal physique occupe une bande de fréquences contenant un ou plusieurs blocs de ressource, la bande passante d'un canal physique étant alors un multiple de 180 kHz.

Ainsi, il est nécessaire d'allouer au moins un bloc de ressources pour une communication donnée à destination d'un équipement d'utilisateur. En d'autres termes, la granularité de l'allocation est de l'ordre du bloc de ressources. Or, certaines communications telles que, par exemple, les communications de type voix, ne génèrent qu'un faible débit de données. Dans ce cas, le bloc de ressource alloué n'est pas utilisé pleinement en termes de bande passante. L'utilisation du système n'est donc pas optimisée pour les communications de données à faible débit, ce qui présente des inconvénients importants, notamment en termes de coût et de dimensionnement.

Une solution connue, développée dans le cadre du groupe 3GPP « Multimedia Broadcast Multicast Service » (MBMS), permet d'associer un identifiant unique, appelé « Temporary Mobile Group Identifier » (TGMI), à un groupe de communications de type point-à-multipoints transportées sur des mêmes blocs de ressources communs, et un deuxième identifiant, à chaque communication dudit groupe de communications.

Cependant, une telle solution ne permet pas d'optimiser les ressources radio, ni de transmettre une ou plusieurs communications de type point-à-point en utilisant un ou plusieurs mêmes blocs de ressources communs.

En effet, pour une communication point-à-multipoints, les allocations des ressources ne sont pas modifiées en fonction de la qualité perçue par chacun des équipements utilisateurs car une même communication est destinée à l'ensemble des équipements utilisateurs destinataires, l'équipement d'utilisateur le plus défavorisé déterminant la modulation et le codage à appliquer à la communication. Les ressources radio ne sont alors pas optimisées dans cette solution, ce qui présente un inconvénient.

Au contraire, dans le cas d'une communication point-à-point, il est souhaitable de modifier l'allocation des ressources radio afin d'adapter la modulation et le codage de façon à utiliser la plus petite quantité de ressources possible pour assurer cette communication et optimiser ainsi les ressources radio, ce que la solution existante MBMS ne permet pas.

La présente invention a pour but de remédier au moins en partie à ces inconvénients en proposant notamment un procédé simple et efficace permettant une utilisation optimisée des blocs de ressources radio dans un système de télécommunications large-bande, aussi bien pour des communications de type point-à-multipoints que pour des communications de type point-à-point.

Le document WO 2013/066125 A1 intitulé « Method and apparatus for resource allocation in multi-carrier wireless system » est connu de l'état de la technique.

### PRESENTATION GENERALE DE L'INVENTION

L'invention a tout d'abord pour objet un procédé d'allocation de ressources radio à une pluralité de communications dans un système de télécommunications large-bande, chaque communication étant associée à au moins un équipement d'utilisateur, au moins une des communications étant associée à un seul équipement d'utilisateur, lesdites ressources radio étant réparties en temps et en fréquence dans des blocs de ressources, le procédé étant remarquable en ce que la pluralité de communications forme au moins un groupe de communications et qu'au moins un même bloc de ressources est alloué audit groupe de communications afin de transmettre la pluralité de communications.

Une même communication peut être destinée à un unique équipement d'utilisateur (communication dite « point-à-point ») ou bien à un groupe d'équipements d'utilisateur (communication dite « point-à-multipoints »). Toutefois, au moins une des communications est associée à un seul équipement d'utilisateur. En d'autres termes, il y a au moins une communication point-à-point dans le groupe de communications.

En outre, la pluralité de communications peut être répartie dans une pluralité de groupes de communications, chaque groupe étant alloué au moins un même bloc de ressources afin de transmettre la ou les communications qui le compose.

Le procédé selon l'invention permet ainsi de grouper plusieurs communications, dont au moins une est une communication point-à-point, dans un même bloc de ressource ou dans un même ensemble de blocs de ressources sans qu'un bloc ne soit alloué à une et une seule communication. En d'autres termes, la pluralité de communication est transmise dans un ou plusieurs blocs de ressources radio comme si elle ne formait qu'une seule et même communication. Ceci permet d'utiliser pleinement et utilement la bande passante de chaque bloc de ressources afin d'augmenter la bande passante totale du système et d'en réduire le coût.

Le ou les blocs de ressources sont alloués au groupe de communications à partir d'au moins une information, reçue d'au moins l'un des équipements d'utilisateur, sur la qualité d'une communication dans laquelle ledit équipement d'utilisateur est impliqué. L'utilisation d'une telle information sur la qualité de la communication est particulièrement avantageuse dans le cas d'une communication point-à-point. En effet, la modulation et codage, et donc le nombre de blocs de ressources alloué, à chaque communication, notamment point-à-point, est ainsi adapté en fonction de la qualité de la liaison descendante. A cette fin, l'information sur la qualité peut être envoyée par le ou les équipements d'utilisateur du groupe de communication à la station de base dans un message de type rapport Indicateur de Qualité du Canal (Channel Qualité Indicator report ou CQI report en langue anglaise) dans la terminologie 3GPP LTE.

Ainsi, par exemple, selon la nature de l'information de qualité reçue, il peut être décidé de continuer à utiliser le ou les blocs de ressources préalablement alloués au groupe de communications ou bien au contraire de changer l'allocation du ou des blocs de ressources pour le groupe de communications ou bien encore de diviser le groupe de communications en au moins un premier sous-groupe de communications, auquel est alloué au moins un même premier bloc de ressources, et en un deuxième sous-groupe de communications, auquel est alloué au moins un même deuxième bloc de ressources, chacun de ces sous-groupes pouvant être complétés par d'autres communications qui ne faisaient pas partie du groupe de communications initial. Ce mécanisme permet d'effectuer une adaptation du débit des transmissions des communications utilisant le ou les mêmes blocs de ressources afin d'augmenter l'efficacité spectrale du système mettant en oeuvre le procédé.

De manière avantageuse, les communications correspondant à un même Indicateur de Qualité du Canal ou à des Indicateurs de Qualité du Canal proches sont groupées dans un même groupe de communications afin d'optimiser l'utilisation des blocs de ressources radio.

Selon une caractéristique de l'invention, le procédé comprend une étape de cryptage d'une communication destinée à un équipement d'utilisateur ou à un groupe d'équipements d'utilisateur donné à l'aide d'une clé de cryptage unique. Une clé de décryptage unique, associée à ladite clé de cryptage, permet de décrypter ladite communication, la clé de cryptage et la clé de décryptage associée pouvant être identiques.

Dans ce cas, le procédé peut comprendre une étape de fourniture d'une clé de décryptage unique à chaque équipement d'utilisateur et/ou à chaque groupe d'équipements d'utilisateur.

Avantageusement, le ou les blocs de ressources alloués au groupe de communications sont identifiés par un premier identifiant et le procédé comprend une étape d'envoi dudit premier identifiant à chaque équipement d'utilisateur impliqué dans une communication du groupe de communications.

De préférence, le premier identifiant est de type Radio Network Temporary Identifier (RNTI) dans la terminologie 3GPP LTE.

Selon un aspect de l'invention, le procédé comprend une étape de transmission du groupe de communications vers la pluralité d'équipements d'utilisateur sur un lien radio en utilisant le ou les blocs de ressources alloués, et, pour chaque équipement d'utilisateur, les étapes :
- d'identification, à partir du premier identifiant, du ou des blocs de ressources sur lesquels le groupe de communications est transmis,
- de réception du groupe de communications transmis sur le ou les blocs de ressources identifiés.

Selon une caractéristique de l'invention, le procédé comprend une étape d'application de sa clé de décryptage à au moins une communication du groupe de communications reçu de manière à la décrypter.

Selon un premier mode de mise en oeuvre du procédé selon l'invention, n'entrant pas dans le cadre des revendications, chaque équipement d'utilisateur applique sa clé de décryptage à l'ensemble des communications du groupe de communications reçu. Dans ce cas, seule la communication destinée audit équipement d'utilisateur est décryptée correctement par ledit équipement d'utilisateur, les autres communications, qui ne lui sont pas destinées, étant toutefois traitées par l'équipement d'utilisateur avec sa clé pour tenter d'en réaliser le décryptage mais n'étant alors pas décryptées.

Selon un deuxième mode de mise en oeuvre du procédé selon l'invention, chaque équipement d'utilisateur reçoit un deuxième identifiant permettant d'identifier, dans le groupe de communications reçu, une communication qui lui est destinée, identifie la communication qui lui est destinée à partir du deuxième identifiant et applique sa clé de décryptage à ladite communication de manière à la décrypter. Ce mode de mise en oeuvre permet de réduire la quantité de traitement de décryptage à réaliser, et donc le coût et la complexité du système, puisque seule la communication qui est destinée à un équipement d'utilisateur donné est traitée par ledit équipement d'utilisateur avec sa clé pour en réaliser le décryptage.

De manière avantageuse, le ou les blocs de ressources sont alloués au groupe de communications à partir d'au moins une information dite « d'acquittement », reçue d'au moins l'un des équipements d'utilisateur, de la réception et du décryptage d'une communication destinée audit équipement d'utilisateur. L'utilisation d'une telle information d'acquittement est particulièrement avantageuse dans le cas d'une communication point-à-point. Cette information peut être un message de type ACK (Acknowledgement) ou NACK (Negative-Acknowledgement) dans la terminologie 3GPP LTE.

L'invention concerne aussi un équipement d'utilisateur d'un système de télécommunications configuré pour :
- identifier, à partir d'un premier identifiant d'au moins un même bloc de ressources alloué à un groupe de communications comprenant ladite communication, le ou les blocs de ressources sur lesquels ledit groupe de communications est transmis,
- recevoir ledit groupe de communications transmis sur le ou les blocs de ressources identifiés,
- appliquer une clé de décryptage à au moins une communication du groupe de communications reçu.

L'équipement d'utilisateur est configuré pour recevoir et stocker une clé de décryptage d'une communication destinée audit équipement d'utilisateur.

L'équipement d'utilisateur est configuré pour recevoir et stocker le premier identifiant.

Dans une première forme de réalisation, n'entrant pas dans le cadre des revendications, l'équipement d'utilisateur est configuré pour appliquer la clé de décryptage à l'ensemble des communications du groupe de communications reçu.

Dans une deuxième forme de réalisation, l'équipement d'utilisateur est configuré pour :
- recevoir un deuxième identifiant d'une communication qui lui est destinée,
- identifier, à partir dudit deuxième identifiant reçu, une communication du groupe de communications reçu,
- appliquer la clé de décryptage à la communication identifiée.

Selon un aspect de l'invention, l'équipement d'utilisateur est configuré pour envoyer, de préférence dans un message de type « CQI report », au moins une information sur la qualité d'une communication dans laquelle ledit équipement d'utilisateur est impliqué.

Selon un autre aspect de l'invention, l'équipement d'utilisateur est configuré pour envoyer, de préférence dans un message de type « ACK » ou « NACK », au moins une information dite « d'acquittement » de la réception et du décryptage d'une communication destinée audit équipement d'utilisateur.

L'invention concerne aussi une unité d'allocation de ressources radio à une pluralité de communications destinée à une pluralité d'équipements d'utilisateur dans un système de télécommunication large-bande, chaque communication étant associée à au moins un équipement d'utilisateur, au moins une des communications étant associée à un seul équipement d'utilisateur, lesdites ressources radio étant réparties en temps et en fréquence dans des blocs de ressources, ladite unité étant remarquable en ce que, la pluralité de communications formant un groupe de communications, elle est configurée pour allouer au moins un même bloc de ressources audit groupe de communications afin de transmettre la pluralité de communications.

De préférence, l'unité d'allocation de ressources comprend ou est reliée à un module de cryptage configuré pour crypter chaque communication de la pluralité de communication avec une clé de cryptage.

Selon un aspect de l'invention, l'unité d'allocation de ressources est configurée pour allouer le ou les blocs de ressources au groupe de communications à partir d'au moins une information, reçue d'au moins l'un des équipements d'utilisateur, sur la qualité d'une communication dans laquelle ledit équipement d'utilisateur est impliqué. Ainsi, par exemple, selon la nature de l'information de qualité reçue, l'unité d'allocation de ressources peut décider de continuer à utiliser le ou les blocs de ressources préalablement alloués au groupe de communication ou bien au contraire de changer l'allocation du ou des blocs de ressources pour le groupe de communications ou bien encore de diviser le groupe de communications en au moins un premier sous-groupe de communications, auquel est alloué au moins un premier bloc de ressources, et un en deuxième sous-groupe de communications, auquel est alloué au moins un deuxième bloc de ressources, chacun de ces sous-groupes pouvant être complétés par d'autres communications qui ne faisaient pas partie du groupe de communications initial.

Selon un aspect de l'invention, l'unité d'allocation de ressources radio est configurée pour allouer le ou les blocs de ressources au groupe de communications à partir d'au moins une information dite « d'acquittement », reçue d'au moins l'un des équipements d'utilisateur, de la réception et du décryptage d'une communication destinée audit équipement d'utilisateur. L'unité d'allocation de ressources reçoit de préférence l'ensemble des informations d'acquittement envoyées par les équipements d'utilisateur impliqués dans les communications du groupe de communications pour lesquelles l'unité d'allocation de ressources alloue des blocs de ressources.

L'invention concerne également une station de base configurée pour transmettre une pluralité de communications vers une pluralité d'équipements d'utilisateur sur un lien radio en utilisant des ressources radio, ladite station de base étant remarquable en qu'elle comprend une unité d'allocation desdites ressources radio telle que présentée précédemment.

De préférence, la station de base comprend ou est reliée à un module de cryptage configuré pour crypter chaque communication de la pluralité de communication avec une clé de cryptage avant sa transmission.

L'invention concerne en outre un système de télécommunications large-bande comprenant :
- une pluralité d'équipements d'utilisateur tels que présentés précédemment,
- au moins une unité d'allocation de ressources radio telle que présentée précédemment,
- au moins une station de base configurée pour transmettre une pluralité de communications vers ladite pluralité d'équipements d'utilisateur sur un lien radio en utilisant les ressources allouées par ladite unité d'allocation de ressources radio.

De préférence, le système comprend une station de base comportant une unité d'allocation de ressources radio telle que présentée précédemment.

L'invention concerne aussi un support de données pour un programme d'ordinateur comportant des instructions pour la mise en oeuvre du procédé selon l'invention par un équipement d'utilisateur lorsque le programme est exécuté par au moins un processeur. L'invention concerne de même un support de données pour un programme d'ordinateur comportant des instructions pour la mise en oeuvre du procédé selon l'invention par une station de base lorsque le programme est exécuté par au moins un processeur.

D'autres caractéristiques et avantages de l'invention apparaîtront lors de la description qui suit faite en regard des figures annexées données à titre d'exemples non limitatifs et dans lesquelles des références identiques sont données à des objets semblables.

### DESCRIPTION DES FIGURES

La figure 1 représente schématiquement une forme de réalisation du système selon l'invention.

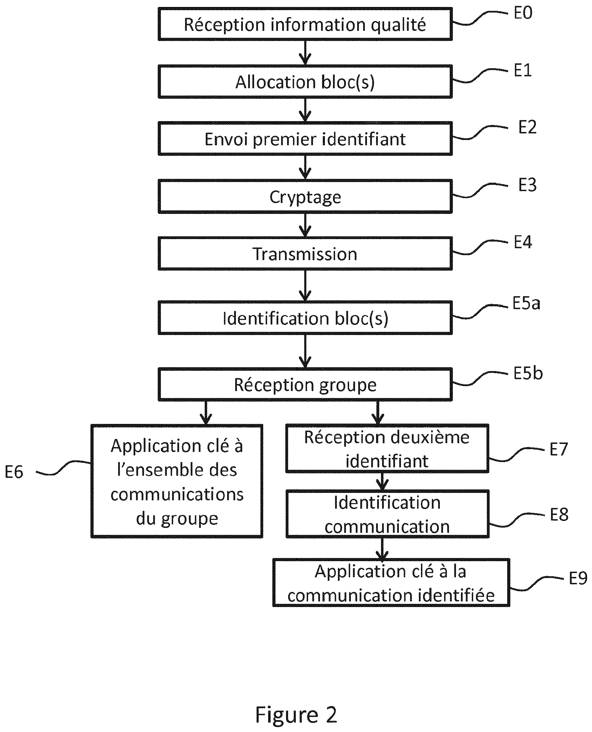

La figure 2 illustre un mode de mise en oeuvre du procédé selon l'invention.

### DESCRIPTION DETAILLEE DE L'INVENTION

### Description d'une forme de réalisation du système selon l'invention

### I. Système 1

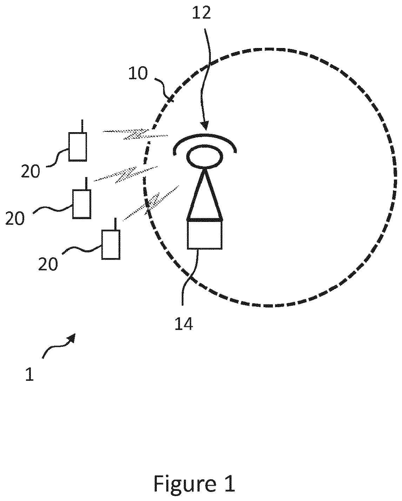

Le système 1 de télécommunications large-bande illustré à la figure 1 comprend un réseau 10 de télécommunications et une pluralité d'équipements d'utilisateur 20 connectés audit réseau 10 via une station de base 12.

### A) Réseau 10

Dans l'exemple décrit ci-après, le réseau 10 de télécommunications est un réseau de type 3GPP LTE connu de l'homme du métier. L'invention s'applique toutefois plus généralement à tout type de réseau 10 de télécommunications large-bande dont les ressources radio sont définies sous forme de blocs de ressources et particulièrement aux réseaux de type 3GPP LTE et LTE-Advanced.

Le réseau 10 comprend une pluralité d'éléments connus tels que des stations de base, des serveurs, routeurs et passerelles (non représentés) interconnectés entre eux de sorte à permettre aux équipements d'utilisateur 20 de recevoir des communications du réseau 10 et/ou d'envoyer des communications vers le réseau 10, par exemple pour communiquer avec d'autres équipements d'utilisateur (non représentés) connectés au réseau 10.

A des fins de simplification et de clarté, on a représenté à la figure 1 une seule station de base 12 à laquelle est connectée une pluralité d'équipements d'utilisateur 20.

La station de base 12 permet la communication des équipements d'utilisateur 20 avec le réseau 10 sur un lien radio, par exemple de type Orthogonal Frequency Division Multiple Access (OFDMA) connu de l'homme du métier.

Dans cet exemple, la station de base 12 comprend une unité 14 d'allocation de ressources radio configurée pour allouer des ressources radio, réparties en temps et en fréquence dans des blocs de ressources, à une pluralité de communications destinées à la pluralité d'équipements d'utilisateur 20.

On notera que, dans une autre forme de réalisation du système selon l'invention, l'unité d'allocation de ressources radio 14 pourrait être séparée de la station de base 12.

Chaque communication de la pluralité de communications est soit associée à un équipement d'utilisateur 20 (communication point-à-point), soit associée à un groupe d'équipements utilisateurs 20 (communication point-à-multipoints). Toutefois, au moins une des communications est associée à un seul équipement d'utilisateur. En d'autres termes, il y a au moins une communication point-à-point dans le groupe de communications.

Selon l'invention, la pluralité de communications forme un groupe de communications et l'unité d'allocation de ressources radio 14 est configurée pour allouer au moins un même bloc de ressources, identifié par un premier identifiant, audit groupe de communications afin de transmettre ladite pluralité de communications.

Par les termes « au moins un même bloc de ressources », on entend qu'un ou plusieurs blocs de ressources radio sont alloués au groupe de communications de sorte que le groupe de communications ne soit vu que comme une seule communication du point de vue de la gestion des ressources radio.

Le premier identifiant est de préférence de type Radio NetworkTemporary Identifier (RNTI) dans la terminologie 3GPP LTE, sans que cela ne soit bien sûr limitatif de la portée de la présente invention.

A cette fin, chaque communication du groupe de communications est préalablement cryptée avec une clé unique, les clés de cryptage des communications du groupe étant par conséquent différentes entre elles. Chaque clé de cryptage d'une communication est associée à une unique clé de décryptage de ladite communication.

### B) Equipements d'utilisateurs 20

Chaque équipement d'utilisateur 20 est tout d'abord configuré pour :
- recevoir, par exemple de la station de base 12, et stocker un premier identifiant d'un ou plusieurs blocs de ressources radio alloués à un groupe de communications comprenant une communication qui lui est destinée,
- recevoir et stocker une clé de décryptage permettant le décryptage d'une communication transmise par la station de base 12 et qui lui est destinée, ladite communication ayant été cryptée préalablement à sa transmission par la station de base 12 en utilisant la clé de cryptage correspondant à ladite clé de décryptage.

Chaque équipement d'utilisateur 20 est également configuré pour :
- identifier, à partir dudit premier identifiant, le ou les blocs de ressources radio sur lesquels le groupe de communications est transmis,
- recevoir ledit groupe de communications transmis sur le ou les blocs de ressources identifiés,
- appliquer sa clé de décryptage à au moins une communication du groupe de communications reçu.

Dans une première forme de réalisation, n'entrant pas dans le cadre des revendications, l'équipement d'utilisateur 20 est configuré pour appliquer la clé de décryptage stockée à l'ensemble des communications du groupe de communications reçu.

Dans une deuxième forme de réalisation, l'équipement d'utilisateur 20 est configuré pour recevoir un deuxième identifiant d'une communication qui lui est destinée, identifier, à partir dudit deuxième identifiant reçu, une communication du groupe de communications reçu et appliquer la clé de décryptage stockée à la communication identifiée.

L'équipement d'utilisateur 20 est configuré pour envoyer :
- au moins une information sur la qualité d'une communication dans laquelle ledit équipement d'utilisateur est impliqué, de préférence dans un message de type « CQI report », et/ou,
- au moins une information dite « d'acquittement » de la réception et du décryptage d'une communication destinée audit équipement d'utilisateur, de préférence dans un message de type « ACK » ou « NACK ».

### II. Mise en oeuvre de l'invention

Dans l'exemple décrit ci-après, une pluralité de communications, formant un groupe de communications, doit être transmise par la station de base 12 à la pluralité d'équipements d'utilisateur 20, chacune des communications étant destinée à un équipement d'utilisateur 20 ou à un groupe d'équipements d'utilisateur 20.

A cette fin, l'unité d'allocation de ressources radio 14 alloue tout d'abord, dans une étape E1, le ou les blocs de ressources radio, identifiés par un premier identifiant de type RNTI, sur lesquels le groupe de communications sera transmis.

La station de base 12 envoie, dans une étape E2, le premier identifiant aux équipements d'utilisateur 20 destinataires du groupe de communications.

Avant d'être transmise dans le groupe de communications, chaque communication est préalablement cryptée, dans une étape E3, à l'aide d'une clé de cryptage unique associée à une unique clé de décryptage.

Chaque clé de décryptage d'une communication est fournie et stockée préalablement par l'équipement d'utilisateur 20 destinataire de ladite communication. La fourniture de sa clé de décryptage à un équipement d'utilisateur 20 peut être réalisée une unique fois ou bien pour chaque communication distincte qui lui est destinée.

On notera que l'étape E3 pourrait se produire avant l'étape E1 sans que cela ne soit limitatif de la portée de la présente invention.

La station de base 12 transmet alors, dans une étape E4, le groupe de communications vers la pluralité d'équipements d'utilisateur 20 sur un lien radio en utilisant le ou les blocs communs de ressources alloués par l'unité d'allocation de ressources 14 à l'étape E1.

Chaque équipement d'utilisateur 20 :
- identifie dans une étape E5a, à partir du premier identifiant, le ou les blocs de ressources sur lesquels ledit groupe de communications est transmis, et
- reçoit, dans une étape E5b, ledit groupe de communications transmis sur le ou les blocs de ressources identifiés.

En pratique, la station de base transmet le groupe de communications en utilisant les ressources allouées dans des signaux modulés. A la réception de ces signaux, un équipement d'utilisateur 20 démodule tout d'abord lesdits signaux correspondant au ou aux blocs de ressources alloués. Pour cela, des messages de signalisation sont envoyés de manière connue de l'homme du métier par la station de base 12 sur la voie descendante pour décrire la structure des allocations pour les différentes communications et "groupes de communications" transmises par la station de base 12 en utilisant les facilités de cette voie descendante, notamment les facilités de la structure OFDMA dans le cas du système LTE.

Chaque équipement d'utilisateur 20 applique ensuite sa clé de décryptage à au moins une communication du groupe de communications reçu.

Selon un premier mode de mise en oeuvre du procédé selon l'invention, n'entrant pas dans le cadre des revendications, chaque équipement d'utilisateur 20 applique sa clé de décryptage à l'ensemble des communications de groupe de communications reçu dans une étape E6. En pratique, un équipement d'utilisateur 20 applique sa clé de décryptage à la totalité des données obtenues après la démodulation du ou des blocs de ressources alloués.

Dans ce cas, seule une communication destinée à un équipement d'utilisateur 20 donné est décryptée correctement par ledit équipement d'utilisateur 20, les autres communications, qui ne lui sont pas destinées, étant quand même traitées par l'équipement d'utilisateur 20 avec sa clé pour tenter d'en réaliser le décryptage mais n'étant alors pas décryptées correctement.

Selon un deuxième mode de mise en oeuvre du procédé selon l'invention, chaque équipement d'utilisateur 20 reçoit, dans une étape E7, un deuxième identifiant puis identifie dans le groupe de communications reçu, à partir dudit deuxième identifiant, une communication qui lui est destinée dans une étape E8. Un tel deuxième identifiant peut être également de type RNTI.

Une fois ladite communication identifiée, chaque équipement d'utilisateur 20 applique alors, dans une étape E9, sa clé de décryptage à ladite communication de manière à la décrypter. En pratique, un équipement d'utilisateur 20 applique sa clé de décryptage au sous-ensemble, identifié par le deuxième identifiant, des données obtenues après la démodulation du ou des blocs de ressources alloués.

Ce mode de mise en oeuvre permet de réduire la quantité de traitement de décryptage à réaliser, et donc le coût et la complexité du système, puisque seule la communication qui est destinée à un équipement d'utilisateur 20 donné est traitée par ledit équipement d'utilisateur 20 pour en réaliser le décryptage.

Afin d'optimiser l'utilisation des ressources radio, chaque équipement d'utilisateur 20 envoie, par exemple périodiquement dans un message de type « CQI report », à l'unité d'allocation de ressources 14 une information sur la qualité de la ou des communications qu'il reçoit et/ou décrypte ou bien un message de confirmation (ACK) ou de non-confirmation (NACK) de réception et/ou de décryptage d'une communication qui lui est destinée.

En fonction de ces informations, reçues des équipements d'utilisateur 20, par exemple dans une étape E0, l'unité d'allocation de ressources 14 peut modifier l'allocation du ou des blocs de ressources radio de manière mieux répartir les communications sur un ou plusieurs blocs ou à répartir les communications du groupe de communications en sous-groupes, permettant ainsi d'optimiser l'allocation de ressources radio.

Il est à noter, en outre, que la présente invention n'est pas limitée aux exemples décrits ci-dessus et est susceptible de nombreuses variantes accessibles à l'homme de l'art. Notamment, le type de réseau 10 large-bande, le nombre d'équipements d'utilisateur 20, le type du premier identifiant, le type du deuxième identifiant etc..., ne sauraient être interprétés comme limitatifs.

## Revendications

1. Procédé d'allocation de ressources radio à une pluralité de communications dans un système de télécommunications large-bande (1), chaque communication étant associée à au moins un équipement d'utilisateur (20), au moins une des communications étant associée à un seul équipement d'utilisateur, lesdites ressources radio étant réparties en temps et en fréquence dans des blocs de ressources, ladite pluralité de communications formant au moins un groupe de communications et au moins un même bloc de ressources étant alloué (E1) audit groupe de communications afin de transmettre la pluralité de communications, le ou les blocs de ressources étant alloués au groupe de communications à partir d'au moins une information, reçue (E0) d'au moins l'un des équipements d'utilisateur (20), sur la qualité d'une communication dans laquelle ledit équipement d'utilisateur (20) est impliqué, le ou les blocs de ressources alloués au groupe de communications sont identifiés par un premier identifiant, le procédé comprend :
- une étape (E2) d'envoi dudit premier identifiant à chaque équipement d'utilisateur (20) impliqué dans une communication du groupe de communications,
- une étape (E3) de cryptage d'une communication destinée à un équipement d'utilisateur (20) ou à un groupe d'équipements d'utilisateur (20) donné à l'aide d'une clé de cryptage unique à laquelle est associée une clé de décryptage unique permettant de décrypter ladite communication,
- une étape (E4) de transmission du groupe de communications vers la pluralité d'équipements d'utilisateur (20) sur un lien radio en utilisant le ou les blocs de ressources allouées,
et, pour chaque équipement d'utilisateur (20), les étapes :
- d'identification (E5a), à partir du premier identifiant, du ou des blocs de ressources sur lesquels le groupe de communications est transmis,
- de réception (E5b) du groupe de communications transmis sur le ou les blocs de ressources identifiés,
- de réception (E7) d'un deuxième identifiant permettant d'identifier, dans le groupe de communications reçu, une communication qui lui est destinée,
- d'identification (E8) de la communication qui lui est destinée à partir du deuxième identifiant,
- une étape d'application (E9) de sa clé de décryptage à ladite communication du groupe de communications reçu de manière à la décrypter.

2. Equipement d'utilisateur (20) d'un système de télécommunications (1) configuré pour :
- recevoir et stocker un premier identifiant d'au moins un même bloc de ressources alloué à un groupe de communications afin de transmettre la pluralité de communications formée par le groupe de communication, le groupe de communication comprenant une communication destinée à l'équipement utilisateur,
- recevoir et stocker une clé de décryptage permettant le décryptage de la communication reçue par l'équipement utilisateur et qui lui est destinée, ladite communication ayant été cryptée préalablement à sa transmission en utilisant une clé de cryptage correspondant à ladite clé de décryptage,
- identifier, à partir du premier identifiant , le ou les blocs de ressources sur lesquels ledit groupe de communications est transmis,
- recevoir ledit groupe de communications transmis sur le ou les blocs de ressources radio identifiés,
- recevoir un deuxième identifiant d'une communication qui lui est destinée,
- identifier, à partir dudit deuxième identifiant reçu, une communication du groupe de communications reçu,
- appliquer la clé de décryptage à la communication identifiée,
- envoyer au moins une information sur la qualité d'une communication dans laquelle ledit équipement d'utilisateur (20) est impliqué.

3. Système de télécommunications large-bande (1) comprenant :
- une pluralité d'équipements d'utilisateur (20) selon la revendication 2,
- au moins une unité d'allocation de ressources radio (14)configurée pour :
o allouer au moins un même bloc de ressources audit groupe de communications afin de transmettre une pluralité de communications formée par le groupe de communication, le au moins un bloc de ressources alloué au groupe de communications étant identifié par un premier identifiant;
o allouer le au moins bloc de ressources au groupe de communications à partir d'au moins une information reçue d'au moins l'un des équipements d'utilisateur (20), sur la qualité d'une communication dans laquelle ledit équipement d'utilisateur (20) est impliqué,
- au moins une station de base (12) configurée pour :
o envoyer ledit premier identifiant à chaque équipement d'utilisateur (20) impliqué dans une communication du groupe de communications,
o crypter une communication destinée à un équipement d'utilisateur (20) ou à un groupe d'équipements d'utilisateur (20) donné à l'aide d'une clé de cryptage unique à laquelle est associée une clé de décryptage unique permettant de décrypter ladite communication,
o transmettre une pluralité de communications vers ladite pluralité d'équipements d'utilisateur (12) sur un lien radio en utilisant les ressources allouées par ladite unité d'allocation de ressources radio (14).

4. Support de données pour un programme d'ordinateur comportant des instructions pour la mise en oeuvre du procédé selon la revendication 1 par un équipement d'utilisateur (20) lorsque le programme est exécuté par au moins un processeur.

5. Support de données pour un programme d'ordinateur comportant des instructions pour la mise en oeuvre des étapes de réception (E0) d'au moins une information sur la qualité d'une communication, d'allocation (E1), d'envoi (E2) dudit premier identifiant, de cryptage (E3) et de transmission (E4) du groupe de communications du procédé selon la revendication 1 par une station de base (12) lorsque le programme est exécuté par au moins un processeur.

## Patentansprüche

1. Zuordnungsverfahren von Funkressourcen zu einer Vielzahl von Kommunikationen in einem Breitband-Telekommunikationssystem (1), wobei jede Kommunikation wenigstens einer Nutzerausrüstung (20) zugeteilt ist, wobei wenigstens eine der Kommunikationen einer einzigen Nutzerausrüstung zugeteilt ist, wobei die genannten Funkressourcen zeitlich und frequenzmäßig in Ressourcenblöcken verteilt sind, wobei die genannte Vielzahl von Kommunikationen wenigstens eine Gruppe von Kommunikationen bildet und wenigstens ein Ressourcenblock der genannten Gruppe von Kommunikationen zugeordnet ist (E1), um die Vielzahl von Kommunikationen zu übertragen, wobei der Ressourcenblock oder die Ressourcenblöcke der Gruppe von Kommunikationen ausgehend von wenigstens einer Information zugeordnet ist/sind, die von wenigstens einer der Nutzerausrüstungen (20) über die Qualität einer Kommunikation, in der die genannte Nutzerausrüstung (20) eingebunden ist, empfangen wird (E0),
der Ressourcenblock oder die Ressourcenblöcke, der/die der Kommunikationsgruppe zugeteilt ist/sind, wird/werden von einer ersten Kennung identifiziert, wobei das Verfahren umfasst.
- einen Versandschritt (E2) der genannten ersten Kennung an jede Nutzerausrüstung (20), die in eine Kommunikation der Gruppe von Kommunikationen eingebunden ist,
- einen Verschlüsselungsschritt (E3) einer Kommunikation, die für eine bestimmte Nutzerausrüstung (20) oder für eine bestimmte Gruppe von Nutzerausrüstungen (20) mithilfe eines einzigartigen Verschlüsselungsschlüssels bestimmt ist, dem ein einzigartiger Entschlüsselungsschlüssel zugeteilt ist, der das Entschlüsseln der genannten Kommunikation erlaubt,
- einen Übertragungsschritt (E4) der Gruppe von Kommunikationen auf die Vielzahl von Nutzerausrüstungen (20) auf einer Funkverbindung, die den zugeteilten Ressourcenblock oder die zugeteilten Ressourcenblöcke nutzt,
und für jede Nutzerausrüstung (20) die Schritte:
- Identifizieren (E5a) des Ressourcenblocks oder der Ressourcenblöcke, auf dem/denen die Gruppe von Kommunikationen übertragen wird, ausgehend von der ersten Kennung,
- Empfangen (E5b) der Gruppe von Kommunikationen, die auf dem identifizierten Ressourcenblock oder den identifizierten Ressourcenblöcken übertragen wird,
- Empfangen (E7) einer zweiten Kennung, die das Identifizieren einer Kommunikation, die für sie bestimmt ist, in der empfangenen Gruppe von Kommunikationen erlaubt,
- Identifizieren (E8) der Kommunikation, die für sie bestimmt ist, ausgehend von der zweiten Kennung,
- einen Anwendungsschritt (E9) ihres Entschlüsselungsschlüssels auf die genannte Kommunikation der empfangenen Gruppe von Kommunikationen, um sie zu entschlüsseln.

2. Nutzerausrüstung (20) eines Telekommunikationssystems (1), das ausgestaltet ist zum:
- Empfangen und Speichern einer ersten Kennung wenigstens eines und desselben Ressourcenblocks, der einer Gruppe von Kommunikationen zugeteilt ist, um die Vielzahl von Kommunikationen zu übertragen, die von der Gruppe von Kommunikationen gebildet ist, wobei die Gruppe von Kommunikationen eine Kommunikation umfasst, die für die Nutzerausrüstung bestimmt ist,
- Empfangen und Speichern eines Entschlüsselungsschlüssels, der das Entschlüsseln der von der Nutzerausrüstung empfangenen Kommunikation erlaubt und der für sie bestimmt ist, wobei die genannte Kommunikation vor ihrer Übertragung unter Verwenden eines Verschlüsselungsschlüssels, der dem genannten Entschlüsselungsschlüssel entspricht, verschlüsselt wurde,
- Identifizieren des Ressourcenblocks oder der Ressourcenblöcke, auf den/die die genannte Gruppe von Kommunikationen übertragen wird, ausgehend von der ersten Kennung,
- Empfangen der genannten Gruppe von Kommunikationen, die auf den identifizierten Funkressourcenblock oder die identifizierten Funkressourcenblöcke übertragen wird,
- Empfangen einer zweiten Kennung einer Kommunikation, die für sie bestimmt ist,
- Identifizieren einer Kommunikation der empfangenen Gruppe von Kommunikationen ausgehend von der genannten zweiten empfangenen Kennung,
- Anwenden des Entschlüsselungsschlüssels auf die identifizierte Kommunikation,
- Versenden wenigstens einer Information über die Qualität einer Kommunikation, in die die genannte Nutzerausrüstung (20) eingebunden ist.

3. Breitband-Telekommunikationssystem (1), umfassend:
- eine Vielzahl von Nutzerausrüstungen (20) gemäß Anspruch 2,
- wenigstens eine Zuteilungseinheit von Funkressourcen (14) ausgestaltet ist zum:
∘ Zuordnen wenigstens eines und desselben Ressourcenblocks zu der genannten Gruppe von Kommunikationen, um eine Vielzahl von Kommunikationen zu übertragen, die von der Gruppe von Kommunikationen gebildet ist, wobei der wenigstens eine Ressourcenblock, der der Gruppe von Kommunikationen zugeordnet ist, durch eine erste Kennung identifiziert ist;
∘ Zuordnen des wenigstens einen Ressourcenblocks zur Gruppe von Kommunikationen ausgehend von wenigstens einer Information, die von wenigstens einer der Nutzerausrüstungen (20) empfangen ist, über die Qualität einer Kommunikation, in die die genannte Nutzerausrüstung (20) eingebunden ist,
- wenigstens eine Basisstation (12), die ausgestaltet ist zum:
∘ Versenden der genannten ersten Kennung an jede Nutzerausrüstung (20), die in einer Kommunikation der Gruppe von Kommunikationen eingebunden ist.
∘ Verschlüsseln einer Kommunikation, die für eine bestimmte Nutzerausrüstung (20) oder eine bestimmte Gruppe von Nutzerausrüstungen (20) bestimmt ist, mithilfe eines einzigartigen Verschlüsselungsschlüssels, dem ein einzigartiger Entschlüsselungsschlüssel zugeordnet ist, der das Entschlüsseln der genannten Kommunikation erlaubt,
∘ Übertragen einer Vielzahl von Kommunikationen auf die genannte Vielzahl von Nutzerausrüstungen (12) auf einer Funkverbindung unter Verwenden der von der genannten Zuteilungseinheit von Funkressourcen (14) zugeordneten Ressourcen.

4. Datenträger für ein Computerprogramm, umfassend Anweisungen für die Umsetzung des Verfahrens gemäß Anspruch 1 durch eine Nutzerausrüstung (20), wenn das Programm durch wenigstens einen Prozessor ausgeführt ist.

5. Datenträger für ein Computerprogramm, umfassend Anweisungen für die Umsetzung der Empfangsschritte (E0) wenigstens einer Information über die Qualität einer Kommunikation, der Zuordnung (E1), des Versandes (E2) der genannten ersten Kennung, der Verschlüsselung (E3) und der Übertragung (E4) der Gruppe von Kommunikationen des Verfahrens gemäß Anspruch 1 durch eine Basisstation (12), wenn das Programm durch wenigstens einen Prozessor ausgeführt ist.

## Claims

1. A method for allocating radio resources to a plurality of communications in a wideband telecommunications system (1), each communication being associated with at least one user equipment (20), at least one of the communications being associated with a single user equipment, said radio resources being time and frequency divided into resource blocks, said plurality of communications forming at least one group of communications and at least a same resource block being allocated (E1) to said group of communications in order to transmit the plurality of communications, the resource block(s) being allocated to the group of communications from at least one piece of information, received (E0) from at least one piece of the user equipment (20), on the quality of a communication in which said user equipment (20) is involved,
the resource block(s) allocated to the group of communications are identified by a first identifier, the method comprises:
- a step (E2) of sending said first identifier to each piece of user equipment (20) involved in a communication of the group of communications,
- a step (E3) of encrypting a communication intended for a user equipment (20) or a given group of pieces of user equipment (20) using a single encryption key with which a single decryption key for decrypting said communication is associated,
- a step (E4) of transmitting the group of communications to the plurality of user equipment (20) over a radio link by using the resource block(s) allocated,
and, for each piece of user equipment (20), the steps of:
- identifying (E5a), from the first identifier, the resource block(s) over which the group of communications is transmitted,
- receiving (E5b) the group of communications transmitted over the resource block(s) identified,
- receiving (E7) a second identifier for identifying, in the group of communications received, a communication intended for it,
- identifying (E8) the communication intended for it from the second identifier,
- a step of applying (E9) its decryption key to said communication of the group of communications received so as to decrypt it.

2. A user equipment (20) of a telecommunications system (1) configured to:
- receive and store a first identifier of at least a same resource block allocated to a group of communications in order to transmit the plurality of communications formed by the group of communications, the group of communications comprising a communication intended for the user equipment,
- receive and store a decryption key for decrypting the communication received by the user equipment and intended for it, said communication having been encrypted prior to being transmitted by using an encryption key corresponding to said decryption key,
- identify, from the first identifier, the resource block(s) over which said group of communications is transmitted,
- receive said group of communications transmitted over the radio resource block(s) identified,
- receive a second identifier of a communication intended for it,
- identified, from said second received identifier, a communication of the group of communications received,
- apply a decryption key to the communication identified,
- send at least one piece of information on the quality of a communication in which said user equipment (20) is involved.

3. A wideband telecommunications system (1) comprising:
- a plurality of pieces of user equipment (20) according to claim 2,
- at least one radio resource allocation unit (14) configured to:
∘ allocate at least one same resource block to said group of communications in order to transmit a plurality of communications formed by the group of communications, the at least one resource block allocated to the group of communications being identified by a first identifier;
∘ allocate the at least one resource block to the group of communications from at least one piece of information received from at least one of the pieces of user equipment (20), on the quality of a communication in which said user equipment (20) is involved,
- at least one base station (12) configured to:
∘ send said first identifier to each piece of user equipment (20) involved in a communication of the group of communications,
∘ encrypt a communication intended for a user equipment (20) or for a given group of pieces of user equipment (20) using a single encryption key with which a single decryption key for decrypting said communication is associated,
∘ transmit a plurality of communications to said plurality of pieces of user equipment (12) over a radio link by using the resources allocated by said radio resource allocation unit (14).

4. A data medium for a computer program comprising instructions for the implementation of the method according to claim 1 by a user equipment (20) when the program is run by at least one processor.

5. A data medium for a computer program comprising instructions for the implementation of the steps of receiving (E0) at least one piece of information on the quality of a communication, allocating (E1), sending (E2) said first identifier, encrypting (E3) and transmitting (E4) the group of communications of the method according to claim 1 by a base station (12) when the program is run by at least one processor.
